Europäisches Patentamt

European Patent Office

Office européen des brevets

(11) Numéro de publication: **0 349 412**

**A1**

**DEMANDE DE BREVET EUROPEEN**

(21) Numéro de dépôt: **89401821.7**

(22) Date de dépôt: **27.06.89**

(51) Int. Cl.⁵: **G 06 K 19/06**
**G 06 K 7/06**

(30) Priorité: **28.06.88 FR 8808640**

(43) Date de publication de la demande:
**03.01.90 Bulletin 90/01**

(84) Etats contractants désignés:
**BE CH DE ES GB GR IT LI NL SE**

(71) Demandeur: **SCHLUMBERGER INDUSTRIES**
**50, avenue Jean Jaurès**
**F-92120 Montrouge (FR)**

(72) Inventeur: **Mollet, Jean Paul**
**119, Elysées 2**
**F-78170 La Celle Saint Cloud (FR)**

**Rose, René**
**15, rue de l'Etang**
**F-78190 Voisin le Bretonneux (FR)**

(74) Mandataire: **Dronne, Guy**
**SCHLUMBERGER INDUSTRIES 50, avenue Jean Jaurès**
**F-92120 Montrouge (FR)**

(54) **Support d'Informations et système de gestion de tels supports.**

(57) L'invention concerne une carte à mémoire électrique.
La carte a la même forme et comporte les mêmes plages externes de contact qu'une carte à mémoire électronique. Le circuit électrique est formé par une pluralité d'éléments électriques discrets (exemple fusible $F_i$ et $F'_i$) reliés aux plages externes (1 à 8).

FIG. 5

EP 0 349 412 A1

**Description**

## SUPPORT D'INFORMATIONS ET SYSTEME DE GESTION DE TELS SUPPORTS

La présente invention concerne des supports d'informations, notamment des cartes à mémoire, et un système de gestion de tels supports d'informations.

Les cartes à mémoire électronique sont bien connues maintenant. Elles comportent essentiellement une pastille semi-conductrice dans laquelle est réalisé un circuit intégré, la pastille étant fixée dans un corps de carte en matériau plastique.

Pour les utilisations les plus simples de la carte, par exemple pour l'acquittement de taxes téléphoniques, le circuit intégré consiste essentiellement en une mémoire non volatile dont un point mémoire est "grillé" à chaque fois qu'une unité de taxe téléphonique doit être acquittée.

De telles cartes sont beaucoup plus sûres que des cartes à piste magnétique puisque le "grillage" d'un point mémoire est irréversible alors qu'il est possible de falsifier les données enregistrées sur une piste magnétique. Cependant, par rapport aux cartes magnétiques, elles présentent l'inconvénient d'être d'un coût sensiblement plus élevé, ce coût étant très largement lié à celui du circuit intégré qu'elles contiennent. Ce surcoût peut apparaître comme d'autant plus difficile à accepter que la valeur fiduciaire contenue dans la carte est faible et que la carte ne peut être rechargée.

De plus, un système de fourniture de prestations par cartes comprend également des dispositifs de traitement dans lesquels la carte est introduite et qui autorisent ou non la fourniture de la prestation à l'usager détenant une carte. Il s'agit par exemple de postes téléphoniques publics actionnés par l'introduction d'une carte. Ces dispositifs comprennent un dispositif de lecture et d'écriture des cartes qui fait partie intégrante de la machine qui délivre la prestation. Ces dispositifs peuvent être assez onéreux.

Lorsqu'une société veut mettre en place un système complet de fourniture de prestations à cartes à mémoire électronique il lui faut donc d'une part supporter les frais d'acquisition et de mise en place des machines de fourniture de prestations mais encore ceux relatifs à l'achat d'un nombre élevé de cartes à mémoire pour les mettre en circulation. Or il n'est pas sûr, lorsqu'un tel système est mis en place dans une nouvelle région ou dans un nouveau pays, qu'il sera accepté par les utilisateurs.

Il serait donc intéressant de pouvoir proposer aux sociétés qui veulent mettre en place un système de fourniture de prestations par cartes, un système dans lequel les cartes auraient un coût de fabrication très sensiblement inférieur à celui des cartes à mémoire électronique actuelles mais dans lequel les cartes auraient exactement l'allure externe et les caractéristiques externes des vraies cartes à mémoire électronique pour pouvoir être utilisées dans des dispositifs de traitement de cartes identiques ou sensiblement identiques à ceux qui utilisent des vraies cartes à mémoire électronique.

Un objet de l'invention est de fournir des supports d'informations et un système de gestion de cartes qui répondent aux conditions énoncées précédemment.

Pour atteindre ce but un support d'informations, selon l'invention comprenant un corps de carte présentant une face principale plane et dans ladite face principale n plages de contact électrique externe se caractérise en ce qu'il présente l'aspect extérieur d'une carte à mémoire électronique et en ce qu'il comprend au moins n-1 éléments électriques discrets reliés auxdites plages par des portions conductrices, lesdits éléments électriques et lesdites portions conductrices étant noyées dans le corps de la carte, chaque élément électrique présentant un état initial de conduction électrique, et au moins un deuxième état de conduction électrique irréversible, ledit deuxième état de conduction étant pris lorsqu'un signal électrique prédéterminé est appliqué entre au moins deux desdites plages associées audit élément électrique.

Le système de gestion de supports d'informations du type décrit ci-dessus se caractérise en ce qu'il comprend au moins un dispositif de traitement de supports d'informations comprenant un circuit de traitement, un ensemble de connexion à n contacts électriques pour établir, lorsque ledit support est en position de traitement, une liaison entre chaque plage de contact dudit support et ledit circuit de traitement, ledit circuit de traitement comprenant des moyens commandables pour appliquer à chaque paire de contact électrique soit ledit signal électrique prédéterminé d'écriture soit un signal électrique de lecture qui n'est pas apte à faire passer un élément électrique de son état initial de conduction à son deuxième état de conduction, et des moyens pour déterminer l'état de conduction d'un élément électrique lorsque ledit signal électrique de lecture lui est appliqué.

L'invention sera mieux comprise à la lecture de la description qui suit de plusieurs modes de réalisation de l'invention donnés à titre d'exemples non limitatifs.

La description se réfère au dessin annexé sur lequel :

    La figure 1 montre une carte ;

    La figure 2 montre un lecteur de cartes en coupe verticale;

    La figure 3 est une vue partielle de dessus du lecteur de la figure 2 ;

    La figure 4 est un schéma montrant le circuit de traitement du lecteur de cartes ;

    La figure 5 montre un schéma de réalisation du module électrique de la carte ;

    La figures 6a et 6b montrent un mode de réalisation du module électrique selon la figure 5.

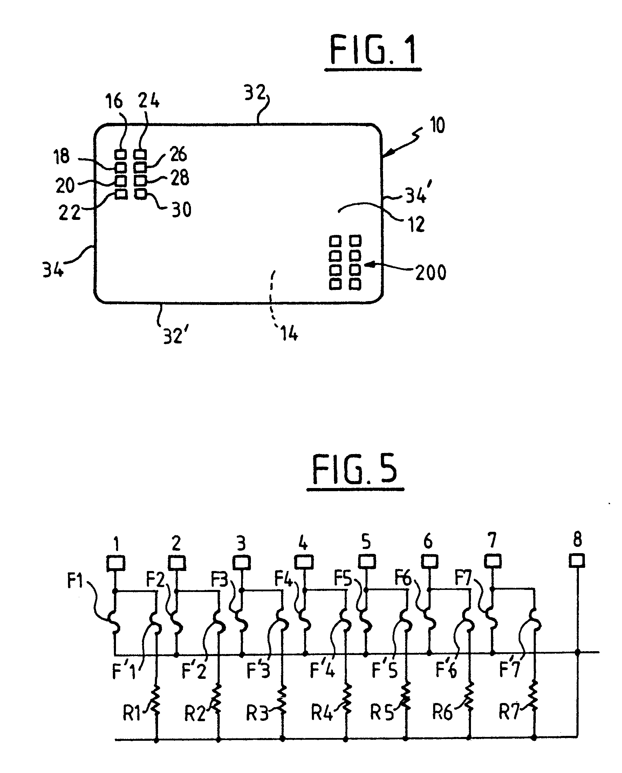

La figure 1 montre une carte à mémoire selon l'invention. Elle comprend un corps 10 en matériau plastique (PVC ou ABS par exemple) de forme générale parallèlepipédique rectangle présentant deux faces principales : la face 12, visible sur la figure 1 ; et la face 14 non visible. On peut également réaliser le corps de carte en polyester ou en papier. Dans la face 12 sont disposées des plages externes de contact électrique 16 à 30 qui sont reliées à un circuit électrique monté à l'intérieur de la carte. Ces plages externes sont destinées, lorsque la carte est introduite dans un lecteur de cartes, à permettre l'établissement d'une liaison électrique entre le circuit de la carte et le circuit de traitement du lecteur de cartes.

Selon l'invention, la forme du corps de carte ainsi que les dimensions et positions des plages externes 16 à 30 sont exactement identiques à celles des éléments correspondants d'une carte à mémoire électronique. En d'autres termes, extérieurement, la carte, selon l'invention, est identique à une vraie carte à mémoire électronique. Dans le cas particulier de la France, les cartes à mémoire électronique doivent être conformes soit à la norme ISO soit à la norme AFNOR. Ces normes définissent notamment les dimensions du corps de carte, les dimensions des plages externes 16 à 30 et leur position par rapport aux bords 32 et 34 du corps de carte. Si la carte selon l'invention est destinée à être utilisée en France elle se conforme donc à une de ces deux normes. Cependant l'épaisseur du corps de carte n'est pas un paramètre critique pour l'utilisation d'une carte dans un lecteur conforme aux normes précitées. L'épaisseur du corps d'une carte selon l'invention pourra donc, sur ce point, s'écarter de la norme. La seule contrainte de ce point de vue étant que la carte puisse être traitée dans un lecteur de cartes standard.

Comme on l'a déjà indiqué, selon l'invention, le circuit de mémorisation, installé dans le corps de carte et relié aux plages externes 16 à 30 n'est pas réalisé dans une pastille semi-conductrice, mais il s'agit d'un circuit électrique formé d'éléments électriques discrets, reliés aux plages externes par des éléments conducteurs. Chaque élément électrique destiné à constituer un ou éventuellement plusieurs points de mémoire est relié de préférence à deux plages externes. L'élément électrique présente un état initial de conduction électrique, cet état initial pouvant être modifié en appliquant aux plages externes associées à cet élément électrique un signal électrique convenable, analogue à un signal d'écriture. L'élément électrique est choisi de telle manière que, lorsqu'il a pris l'état de conduction modifié, il ne peut plus revenir à l'état initial de conduction.

En outre chaque élément électrique est constitué et monté de telle manière que, en appliquant aux plages associées à un élément électrique un signal électrique convenable dit de lecture, on puisse déterminer si l'élément électrique est dans son état initial ou dans un état de conduction modifié. De préférence à chaque élément électrique est associé un couple de plages externes. En appliquant un signal électrique d'écriture au couple de plages on peut modifier l'état de conduction de l'élément électrique. En appliquant au couple de plages un signal électrique de lecture on peut savoir si l'élément électrique est dans l'état initial ou dans l'état modifié.

Avant de décrire plusieurs modes de réalisation du circuit électrique de la carte, on va décrire un dispositif de traitement de cartes (ci-après appelé lecteur de cartes) utilisable avec les cartes selon l'invention.

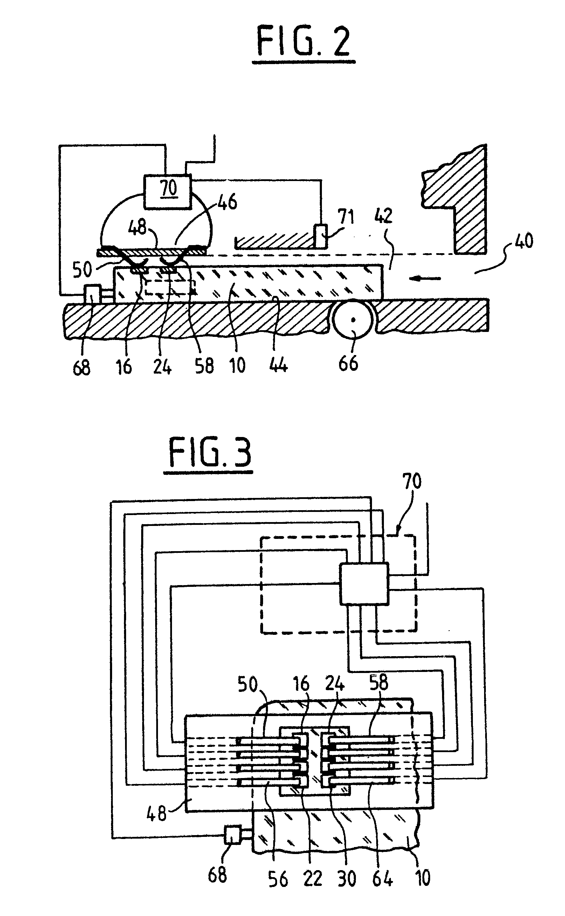

Les figures 2 et 3 montrent l'organisation générale d'un tel lecteur qui est identique à celle d'un lecteur de cartes à mémoire électronique. Il comprend une fente 40 d'introduction de la carte 10 qui se prolonge par un couloir de guidage 42 de la carte. Le couloir 42 est limité par un plancher 44 et par des parois latérales non représentées. A l'intérieur du couloir 42 est monté un connecteur 46. Le connecteur 46 comprend essentiellement un support isolant 48 sur lequel sont fixées des lames conductrices flexibles 50 à 64. Le nombre de lames est égal au nombre de plages externes de la carte c'est à dire huit dans l'exemple décrit.

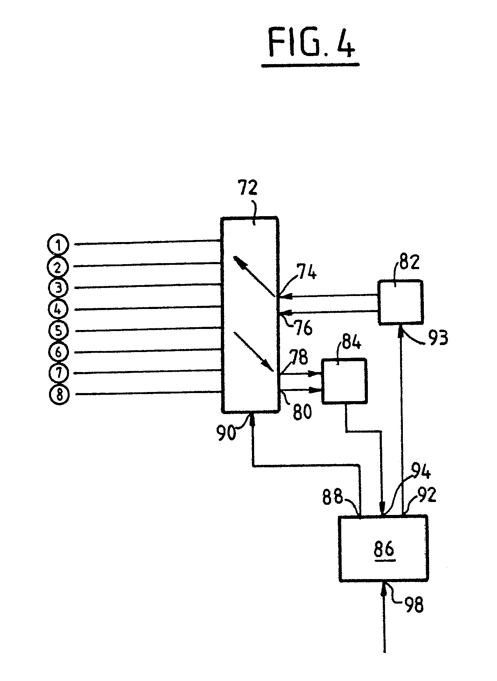

La carte est amenée en position de traitement soit manuellement, soit par un système d'entraînement représenté sur la figure 2 par un galet 66. Lorsque la carte est en position de traitement, chaque plage externe 16 à 30 de la carte 10 est en contact électrique avec une des lames conductrices. Dans le couloir 42 est également monté un détecteur 68 de présence de carte qui délivre un signal lorsque la carte est arrivée en position de traitement. Les huit lames flexibles 50 à 64 et le détecteur 68 sont reliés à un circuit de traitement 70 par des liaisons électriques. Le circuit de traitement 70 comporte des parties existant déjà dans les lecteurs de cartes à mémoire électronique et des parties spécifiques qui vont être décrites en liaison avec la figure 4.

De plus, comme le lecteur doit pouvoir traiter des cartes standard et des cartes selon l'invention, ces dernières sont munies sur la face 12 de leur corps d'une marque magnétique ou optique. Le lecteur est muni d'un détecteur 71 adapté qui déclenche le processus spécifique lorsqu'une carte selon l'invention est introduite dans le lecteur.

Sur la figure 4, par simplification, on a repéré par les chiffres 1 à 8 les conducteurs venant des lames conductrices 50 à 64, ces lames conductrices étant elles-mêmes en contact électrique avec les plages externes 16 à 30 lorsque la carte est en position de lecture. Les lignes 1 à 8 sont reliées aux bornes correspondantes d'un circuit de connexion 72. Le circuit de connexion 72 est double. Il permet d'une part de relier des bornes d'alimentation 74 et 76 à deux quelconques des conducteurs 1 à 8 et d'autre part de relier deux quelconques des conducteurs 1 à 8 à deux bornes 78 et 80 de prise de mesure. Les bornes d'alimentation 74 et 76 sont reliées à une source de tension commandable 82 et les bornes 78 et 80 sont reliées à un circuit de mesure de tension 84.

Un circuit de commande 86 présente une première sortie 88 qui est reliée à l'entrée de commande 90 du circuit de connexion 72, et une deuxième sortie 92 qui est reliée à l'entrée de commande 94 de la source de tension 82. Le circuit de commande 86 comprend de plus une entrée 96 sur laquelle il reçoit le résultat de la mesure effectuée par le circuit 84.

Le circuit 82 peut délivrer une première tension de lecture $V_L$ qui est insuffisante pour provoquer le changement d'état de conduction d'un élément électrique de la carte, et au moins une deuxième tension $V_E$ d'écriture qui permet de modifier l'état de conduction d'un élément électrique de la carte.

Le fonctionnement du lecteur est le suivant : lorsqu'une carte 10 est introduite dans le lecteur et qu'elle arrive en position de traitement, le détecteur 68 envoie au circuit de triatement 70 et plus précisément au circuit de commande 86 un signal qui déclenche les opérations qui suivent. Le circuit 82 est commandé pour appliquer sur les bornes 74 et 76 la tension de lecture $V_L$, et le circuit de connexion 72 est commandé pour relier simultanément aux bornes 74, 76 et 78, 80 des couples de lignes 1 à 8 dans un ordre préétabli dit ordre d'écriture dans la carte. A chaque fois que la tension de lecture $V_L$ est appliquée à un couple de plages de contact, le dispositif de mesure 84 délivre vers le circuit de commande 86 un signal qui indique que l'élément électrique de la carte est dans l'état modifié ou dans l'état initial. Dès que le signal délivré par le circuit de mesure indique que l'élément électrique est dans l'état initial, le circuit de connexion 72 est maintenu dans la position qu'il occupe alors et à la réception d'un signal d'inscription reçu sur son entrée 98, le circuit de commande 86 peut commander le "grillage" d'un élément électrique, par exemple pour autoriser l'obtention d'une unité de taxation téléphonique. A la réception du signal d'écriture le circuit de commande 86 commande par sa sortie 92 la source de tension 82 pour que celle-ci délivre la tension d'écriture $V_E$. Cela provoque le passage de l'état initial à l'état modifié de l'élément électrique sélectionné par le circuit de connexion 72.

Puis le circuit de commande 86 commande le générateur de tension 82 pour qu'il délivre la tension de lecture $V_L$ afin de vérifier que l'élément électrique a bien vu son état de conduction être modifié. Ensuite le circuit 82 est commandé pour ne délivrer aucune tension et le circuit de connexion est commandé pour se connecter sur le couple de lignes suivant. Il est prêt à "griller" un nouvel élément électrique de la carte.

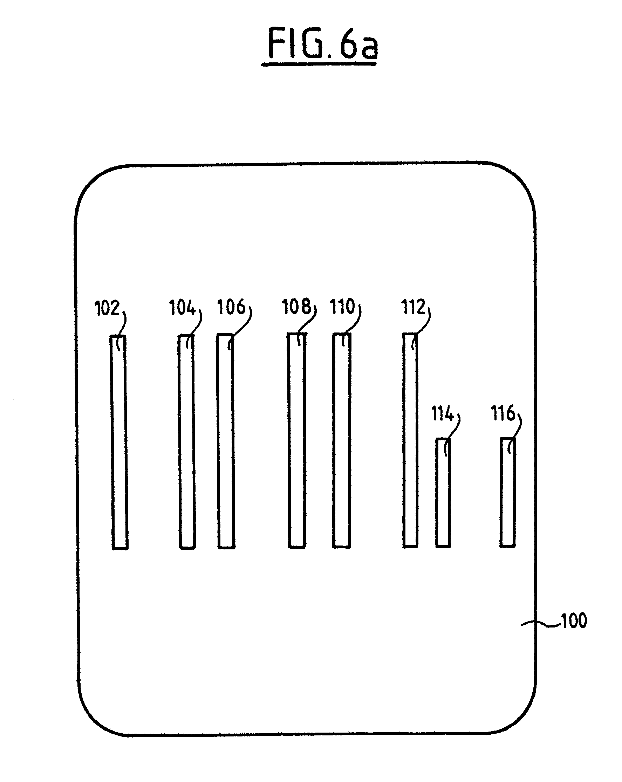

La figure 5 montre un premier mode de réalisation du circuit électrique de la carte et donc des éléments électriques et des éléments de connexion. Sur cette figure on a encore repéré par les chiffres 1 à 8 les plages externes de connexion électrique qui occupent en fait sur le corps de la carte les positions des plages externes 16 à 30 de la figure 1. Chaque élément électrique est constitué par un fusible $F_i$ qui est calibré pour rester intact (état initial lorsqu'on lui applique la tension de lecture $V_L$ et pour fondre lorsqu'on lui applique la tension d'écriture $V_E$. Chacun des fusibles $F_1$ à $F_7$ est monté entre la plage 1 et une des plages 2 à 8. En fait, comme la carte ne contiendrait alors que 7 "points de mémoire", le circuit électrique comprend de préférence une deuxième série de fusibles $F'_1$ à $F'_7$, chacun de ces fusibles étant monté entre une des plages 2 à 7 et la plage 1 par l'intermédiaire d'une résistance $R_2$ à $R_7$ montée en série avec le fusible $F'_1$ à $F'_7$. Les résistances $R_1$ à $R_7$ sont définies de

telle manière que, lorsqu'on applique la tension d'écriture $V_E$ le courant passant à travers un fusible $F_i$ soit suffisant pour le faire fondre mais que le courant passant à travers le fusible correspondant $F'_i$ soit insuffisant pour produire le même effet. Le "grillage" des fusibles $F'_i$ est obtenu en appliquant aux plages correspondantes une deuxième tension d'écriture $V'_E$ qui est suffisante pour que le courant passant à travers le fusible $F'_i$ et la résistance $R_i$ provoque la fusion de celui-ci. Avec cette architecture de circuit électrique il est nécessaire que la source de tension 82 du lecteur de cartes puisse également délivrer la deuxième tension d'écriture $V'_E$. L'ordre d'écriture consiste à "griller" d'abord les fusibles $F_i$ puis, ensuite, les fusibles $F'_i$. Il est également nécessaire de prévoir deux tensions de lecture $V_L$ pour les fusibles $F_i$ et $V'_L$ pour les fusibles $F'_i$. La tension $V'_L$ peut être identique à la tension $V_E$.

Pour augmenter le nombre de points de mémoire on pourrait prévoir une troisième série de fusibles $F''_i$ montés chacun entre une des bornes 2 à 7 et une résistance $R'_i$ reliée à la borne 1, le fusible $F''_i$ et la résistance correspondante $R'_i$ étant montés en série. De préférence, les résistances $R'_i$ sont toutes égales. L'écriture se fait avec une tension $V''_E$ et la lecture avec une tension $V''_L$.

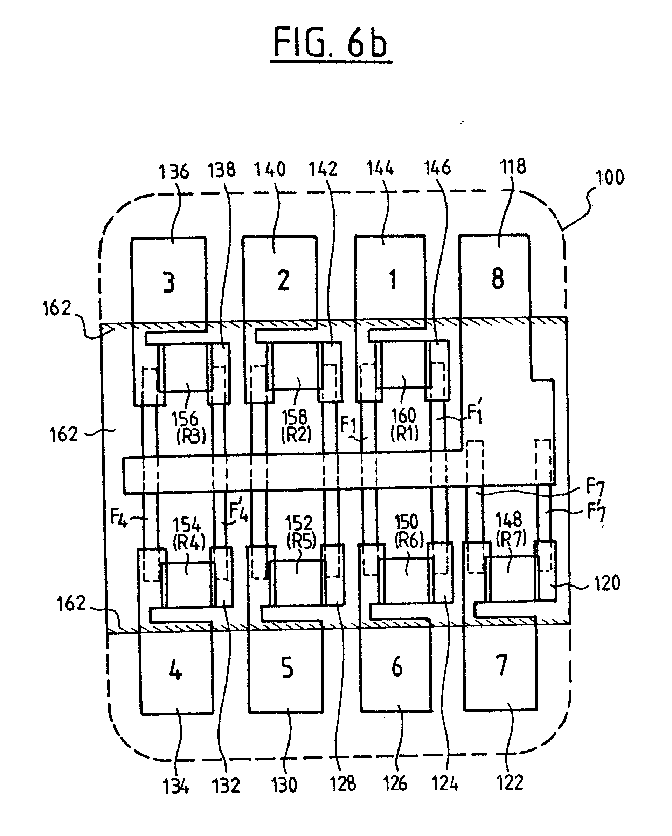

Les figures 6a et 6b montrent un mode préféré de réalisation du module électrique selon l'invention. On part d'un support isolant en matériau plastique 100. Sur le support on réalise des métallisations 102 à 106 pour former les fusibles $F_1$ à $F_7$ et $F'_1$ à $F'_7$. Pour obtenir une bonne définition des fusibles on les réalise de préférence de la manière suivante. On part d'une feuille support sur laquelle est fixée une feuille conductrice, par exemple en aluminium, d'épaisseur réduite, par exemple 500A. L'ensemble est placé sur le support 100 de telle manière que la feuille conductrice soit en contact avec le support 100. Avec un outil qui reproduit la forme des métallisations 102 à 116, on applique sur cette feuille une pression et une température convenable. On obtient, pour les parties concernées, un transfert de la feuille d'aluminium depuis la feuille support jusqu'au support isolant 100. Puis, par une première opération de sérigraphie d'un matériau conducteur, par exemple à base d'argent, on réalise sur la surface du support 100 les plages de contact 1 à 8 et les interconnexions avec les fusibles $F_1$ à $F_7$ et $F'_1$ à $F'_7$ et les résistances $R_1$ à $R_7$. Sur la figure 6b ces métallisations sont repérées par les références 118 à 146. Dans une deuxième étape de dépôt par sérigraphie on réalise à l'aide d'un matériau à base de carbone les dépôts conducteurs 148 à 160 qui constituent les résistances $R_7$ à $R_1$. Enfin par une troisème opération de sérigraphie on réalise une couche isolante 162 qui recouvre l'ensemble des dépôts réalisés dans les étapes précédentes à l'exception des plages externes de contact 1 à 8.

On obtient ainsi un module électrique de très faible épaisseur qui peut être inséré dans le corps 10 de la carte par des techniques déjà bien connues. Il va de soi qu'on réalise sur une même feuille support une pluralité de modules électriques. Puis on découpe cette feuille pour obtenir les modules électriques.

Il faut encore ajouter qu'il est possible de munir une même carte de plusieurs modules électriques identiques. Si l'on revient à la figure 1, on peut réaliser, par les mêmes techniques que précédemment un deuxième module électrique portant la référence 200. Le module 200 occupe, par rapport aux bords 32′ et 34′, la même position que le premier module électrique par rapport aux bords 32 et 34. Cela permet de multiplier par deux le nombre total de points de mémoire. Le détenteur de la carte introduit sa carte, le bord 34 en avant, dans le lecteur de cartes jusqu'à ce qu'il ait épuisé les points de mémoire du premier module électrique, puis il introduit sa carte, le bord 34′ en avant jusqu'à épuisement du deuxième module électrique.

Il faut également noter que, au lieu de réaliser sur un support 100 les différents dépôts décrits en liaison avec les figures 6a et 6 b, il est possible de les réaliser directement sur le face 12 du corps de carte 10.

**Revendications**

1. Support d'informations comprenant un corps de carte présentant une face principale plane et dans ladite face principale n plages de contact électrique externe caractérisé en ce qu'il présente l'aspect extérieur d'une carte à mémoire électronique en ce qui concerne la forme de ladite face principale et la position et la forme des plages de contact électrique externe et en ce qu'il comprend au moins n-1 éléments électriques discrets reliés auxdites plages par des portions conductrices, lesdits éléments électriques et lesdites portions conductrices étant noyées dans le corps de la carte, chaque élément électrique présentant un état initial de conduction électrique, et au moins un deuxième état de conduction électrique irréversible, ledit deuxième état de conduction étant pris lorsqu'un signal électrique d'écriture prédéterminé est appliqué entre au moins deux desdites plages associées audit élément électrique.

2. Support d'informations selon la revendication 1, caractérisé en ce qu'il comprend n-1 éléments électriques discrets formés chacun par un fusible, chaque fusible étant monté entre une desdites plages de contact et une parmi les n-1 autres plages de contact.

3. Support d'informations selon la revendication 1, caractérisé en ce qu'il comprend k (n-1) éléments électriques discrets constitués chacun par un fusible répartis en k séries d'éléments électriques discrets chaque fusible d'une série étant monté entre d'une part une résistance, en série avec le fusible ; reliée à une des plages externes et d'autre part une des n-1 autres bornes, la valeur des résistances associées à chaque série de fusibles étant spécifique.

4. Support d'informations selon l'une quelconque des revendications 1 à 3, caractérisé en ce qu'il comprend une pluralité d'ensemble de n plages de contact électrique externe et une pluralité d'ensembles de k (n-1) éléments électriques discrets, chaque ensemble d'éléments électriques discrets étant relié électriquement à un ensemble de plages de contact électrique externe.

5. Support d'informations selon l'une quelconque des revendications 2 et 3 caractérisé en ce que les fusibles sont réalisés par transfert d'éléments d'une couche métallique sur un support isolant et en ce que les plages de contact électrique externe et les portions conductrices sont réalisées par sérigraphie sur le support isolant.

6. Support d'informations selon la revendication 5 caractérisé en ce que ledit support isolant est le corps de la carte.

7. Support d'informations selon l'une quelconque des revendications 1 à 6, caractérisé en ce que lesdites plages de contact électrique externe, de chaque ensemble sont au nombre de huit disposées selon deux lignes parallèles de quatre contacts.

8. Système de gestion de supports d'informations selon la revendication 1, caractérisé en ce qu'il comprend au moins un dispositif de traitement de supports d'informations comprenant un circuit de traitement, un ensemble de connexion à n contacts électriques pour établir, lorsque ledit support est en position de traitement, une liaison entre chaque plage de contact dudit support et ledit circuit de traitement, ledit circuit de traitement comprenant des moyens commandables pour appliquer à chaque paire de contact électrique soit ledit signal électrique prédéterminé d'écriture soit un signal électrique de lecture qui n'est pas apte à faire passer un élément électrique de son état initial de conduction à son deuxième état de conduction, et des moyens pour déterminer l'état de conduction d'un élément électrique lorsque ledit signal électrique de lecture lui est appliqué.

## FIG. 1

## FIG. 5

# FIG. 2

# FIG.3

# FIG. 4

# FIG. 6a

# FIG. 6b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 577 334 (KALFON)<br>* Résumé; page 1, lignes 11-34; page 2, lignes 1-17,33-37; page 3, lignes 35-38; page 4, lignes 1-8; page 5, lignes 31-37; page 6, lignes 1-7; page 8, lignes 22-37; page 9; page 23, lignes 21-37; pages 24-32; page 48, lignes 1-20; page 49, lignes 23-27; page 50, lignes 6-12; page 51, lignes 3-14; page 54, lignes 14-20 * | 1,2,8 | G 06 K 19/06<br>G 06 K 7/06 |
| A | | 2,3 | |
| Y | FR-A-2 374 702 (SELENIA)<br>* Page 3, ligne 26 - page 4, ligne 8; page 4, lignes 24-27; page 7, lignes 12-15 * | 1,2,8 | |
| A | | 3,4,7 | |
| A | EP-A-0 144 533 (BLAUPUNKT)<br>* Résumé; pages 4-10; revendications 1,2,6 * | 1-3 | |
| A | EP-A-0 156 980 (SIEMENS)<br>* Résumé; page 4, lignes 1-9 * | 4-7 | DOMAINES TECHNIQUES RECHERCHES (Int. Cl.5)<br><br>G 06 K<br>G 07 F |

Le présent rapport a été établi pour toutes les revendications

| Lieu de la recherche | Date d'achèvement de la recherche | Examinateur |
|---|---|---|
| LA HAYE | 27-09-1989 | TACCOEN J-F.P.L. |

EPO FORM 1503 03.82 (P0402)